# FASCICULE DE BREVET EUROPEEN

(11) **EP 3 356 221 B1**
(45) Date de publication et mention de la délivrance du brevet: **21.12.2022**
(21) Numéro de dépôt: 16788220.8
(22) Date de dépôt: 29.09.2016
(51) Int. Cl.: B64C 1/14

(54) **PROCÉDÉ ET SYSTÈME D'OUVERTURE DE PORTE DE SECOURS D'AVION**
VERFAHREN UND SYSTEM UM EINE FLUGZEUGTÜR ZU ÖFFNEN
PROCESS AND SYSTEM FOR OPENING AN EMERGENCY AIRCRAFT DOOR

(30) Priorité: 02.10.2015 FR 1559413
(43) Date de publication de la demande: 08.08.2018
(73) Titulaire: Latecoere, 31500 Toulouse (FR)
(72) Inventeur: VERGNOT, Patrick, 31500 Toulouse (FR); ROMEC, Christian, 31120 Saint Loup Cammas (FR)
(74) Mandataire: Junca, Eric
(86) Numéro de dépôt international: PCT/IB2016/055837
(87) Numéro de publication internationale: WO 2017/056036

(56) Documents cités:
- EP-A2- 0 876 954
- WO-A1-2013/128219
- FR-A1- 3 018 064
- US-A- 5 305 969
- SEIDL M ET AL: "IONIZATION ENERGY AND ELECTRON AFFINITY OF A METAL CLUSTER IN THE STABILIZED JELLIUM MODEL: SIZE EFFECT AND CHARGING LIMIT", JOURNAL OF CHEMICAL PHYSICS, AMERICAN INSTITUTE OF PHYSICS, US, vol. 108, no. 19, 16 juillet 1997 (1997-07-16), pages 8182-8289, XP000694625, ISSN: 0021-9606, DOI: 10.1063/1.476173

## Description

### DOMAINE TECHNIQUE

L'invention se rapporte à un procédé d'ouverture d'une porte de secours d'un avion, ainsi qu'à un système comportant un mécanisme entre la porte de secours et le fuselage d'un avion apte à mettre en œuvre un tel procédé. Une porte de secours d'un avion est située au-dessus de la voilure de l'avion (« overwing emergency exit door » en terminologie anglaise). En dehors de sa fonction d'évacuation des passagers en situation d'urgence, de telles portes peuvent être utilisées pour recevoir/sortir du matériel ou des marchandises.

De manière générale, l'ouverture d'une porte d'avion, par exemple d'une porte passagers ou d'urgence, peut se décomposer en plusieurs mouvements qui se succèdent: déverrouillage et libération d'un cran de sûreté, levage et pivotement de la porte par des actionneurs autour d'un axe de rotation. Pour la fermeture, ces mouvements se succèdent selon une cinématique inverse.

Dans des situations d'urgence, il est recherché de pouvoir déclencher l'ouverture de la porte en un minimum d'opérations dans un minimum de temps tout en sécurisant l'ouverture.

### ÉTAT DE LA TECHNIQUE

La réglementation sécuritaire devient de plus en plus contraignante entraînant la mise en place de cinématiques complexes avec des moyens présentant des inconvénients substantiels, en particulier des bras d'articulation encombrants, coûteux et de masses non négligeables, ainsi que des bavettes d'étanchéité du fait de découpes additionnelles du fuselage pour réaliser le dégagement de la porte vers le haut ou vers le bas.

Il est par exemple connu du document de brevet EP 0 876 954 une porte de secours d'avion équipée de deux bras fixés sur un panneau de porte et montés en articulation sur le fuselage situé au-dessus de la porte pour lever la porte en position supérieure. Tout en étant articulés sur le fuselage, les bras sont également menés par des moyens de guidage sur des panneaux de montage solidaire du panneau de porte.

Pour accompagner le mouvement de la porte, des actionneurs sont montés sur le fuselage en partie supérieure de porte pour exercer une poussée sur les bras d'articulation. Un amortisseur est également présent dans une position similaire pour réguler la vitesse de déplacement de la porte. En outre, afin de maintenir étanche la jonction entre l'intérieur et l'extérieur de l'avion, il est nécessaire de prévoir une bavette d'étanchéité en périphérie de porte qui vient en butée contre le fuselage.

Les ensembles de guidage de bras d'articulation et de guidage de cadre de porte définissent une cinématique d'ouverture de porte typique : en début de levage, les bords supérieur et inférieur de la porte se déplacent à la fois vers l'intérieur du fuselage et vers le haut.

De manière générale, les portes de cabine utilisent des bavettes d'étanchéité pour leur jonction avec le fuselage, la bavette pouvant présenter un volet souple plaqué à l'extérieur du fuselage après avoir été précontraint en direction du fuselage, comme décrit dans le brevet FR 2 975 966. Les phases d'ouverture et de fermeture de porte nécessitent alors une cinématique adaptée pour le positionnement correct du volet. Le document WO 2013/128219 A1 divulgue un système d'ouverture de porte de secours positionnée dans un fuselage d'avion avec une cinématique d'ouverture de porte actionnable de façon sécurisée et simple par un passager.

D'autres solutions, décrites par exemple dans les documents de brevet FR 2 830 564, FR 3 018 064 ou EP 0741 073, prévoient l'utilisation d'un actionneur pneumatique ou hydraulique, de type vérin, en liaison avec une réserve d'alimentation de fluide moteur. Ce type de solution reste encombrant et génère un poids non négligeable, notamment en raison de la réserve de fluide moteur.

### EXPOSÉ DE L'INVENTION

L'invention vise à remédier à ces inconvénients de l'état de la technique à l'aide un système peu encombrant, sans bras d'articulation ni bavette d'étanchéité, sans nécessiter de cinématique complexe, tout en réalisant une ouverture sûre et efficace. En outre, le mécanisme peu encombrant de la présente invention va permettre de répondre au souhait des compagnies aériennes concernant la possibilité d'intégration dans la porte de secours d'un hublot de taille comparable à celle des autres hublots de la cabine.

Pour ce faire, l'invention prévoit une ouverture de porte par un guidage latéral définissant une cinématique intégrée à rebroussement vers l'intérieur de la cabine pour le bord supérieur de la porte, puis vers l'extérieur du fuselage pour le bord inférieur avant de procéder à un levage par rotation.

A ce titre, la présente invention a pour objet un procédé d'ouverture d'une porte de secours de cabine d'avion dans un fuselage selon la revendication 1 pour permettre une sortie d'urgence de la cabine de passagers. Le procédé consiste à effectuer une cinématique d'ouverture de porte agencée dans une découpe du fuselage, à partir d'un état initial de porte en position fermée de profil aligné avec le fuselage, selon la suite d'étapes suivantes, générées successivement par l'action d'une commande d'ouverture: une étape d'activation d'intermédiaires de mouvement tels que définis dans la revendication 1 pour déverrouiller et débloquer une transmission de commande, une étape de levage incliné en liaison avec le fuselage par un coulissement incliné des bords supérieur de la porte vers l'intérieur de cabine et un coulissement simultané d'élévation de son bord inférieur. Cette étape est suivie, par rebroussement de mouvement, d'une étape d'extériorisation du bord inférieur de porte hors de la cabine par un coulissement des bords de la porte en sens inverse et selon sensiblement une même inclinaison que celle du bord supérieur dans l'étape de levage, rétablissant simultanément le bord supérieur de la porte au niveau du fuselage, et une étape finale de pivotement de la porte par un verrouillage et un blocage de la transmission de commande sur la porte qui est alors entraînée, via la commande d'ouverture, en pivotement autour d'un axe de rotation longitudinal du fuselage. De plus, les coulissements sont réalisés par des guidages supérieurs et inférieurs de liaison entre des encadrements de la porte et du fuselage en regard, ainsi que par des guidages de coopération de la transmission de commande avec la porte.

Dans ces conditions, les déplacements en « aller-retour » de la porte occupent un espace minimalisé sans découpe supplémentaire du fuselage, ce qui permet de réduire significativement la taille de la découpe de porte dans le fuselage et de s'affranchir des systèmes d'étanchéité à bavette pour la liaison porte- fuselage.

Selon des modes de mise en œuvre préférés :
- l'étape d'activation des intermédiaires de mouvement sur la transmission de commande débute par une phase de déverrouillage produite par une rotation combinée des intermédiaires de mouvement à partir d'une position de verrouillage-blocage, ce déverrouillage entraînant un déblocage des guidages de coopération de la commande de transmission avec la porte et des guidages de liaison entre les encadrements ;
- l'étape de levage incliné de la porte est générée par des trajectoires simultanées vers l'intérieur de cabine des guidages supérieurs de liaison et vers le haut des guidages inférieurs de liaison, partant d'une position intermédiaire sur les guidages supérieurs et d'une position en butée basse sur les guidages inférieurs de liaison jusqu'à une position en butées hautes sur ces guidages de liaison définissant le rebroussement, alors qu'un coulissement de la porte se produit simultanément vers le haut dans le guidage de coopération de la transmission de commande jusqu'à une position de butée haute;
- dans l'étape d'extériorisation de la porte, les guidages supérieurs et inférieurs de liaison empruntent, en sens inverse et jusqu'à leur déconnexion, des trajectoires d'inclinaison inférieure ou égale à l'inclinaison des trajectoires des guidages supérieurs de liaison dans l'étape de levage et, simultanément, la porte coulisse vers le bas sur le guidage de coopération à partir de la position haute jusqu'à atteindre une butée basse puis, en fin de coulissement, le guidage de coopération de la porte est verrouillée-bloquée par les intermédiaires de mouvement en position de butée de verrouillage sur le guidage de coopération de la transmission de commande correspondant à la position initiale de pivotement; à la fin de la phase d'extériorisation, le bord inférieur de la porte est suffisamment dégagé vers l'extérieur de l'avion par rapport au fuselage de sorte que la phase de pivotement débute sans risque de contact;
- l'étape finale de pivotement de la porte débute par l'entraînement de la porte verrouillée-bloquée sur la transmission de commande par la commande d'ouverture autour de l'axe de rotation de la transmission de commande jusqu'à atteindre une position extrême prédéterminée;
- une compensation de masse de la porte est prévue afin d'équilibrer cette masse lors de l'étape finale de levage.

L'invention se rapporte également à un système d'ouverture de porte de secours positionnée dans un fuselage d'avion selon la revendication 7, le système comportant des encadrements respectifs de porte et de fuselage qui s'étendent en regard, au moins un couple verrou/loquet, une ferrure d'attache de porte et des chemins de guidage supérieurs et inférieurs montés dans l'encadrement de fuselage.

Le système d'ouverture comporte également une poignée de mise en rotation combinée d'au moins le couple verrou/loquet de (dé)verrouillage / (dé)blocage, et un mécanisme d'ouverture équipé, dans au moins une zone d'angle supérieure de la porte, d'un levier de pivotement articulé en rotation sur un bord supérieur de fuselage et muni de chemins de guidage en coopération avec le couple verrou/loquet tel que définis dans la revendication 7 et avec la ferrure d'attache de porte, de galets de guidage supérieurs et inférieurs montés dans l'encadrement latéral de porte pour former des moyens de guidage en liaison avec des chemins de guidage correspondants montés dans l'encadrement de fuselage en regard, les chemins de guidage supérieurs étant globalement inclinés en montant et les chemins de guidage inférieurs coudés. De plus, chaque chemin de guidage supérieur présente deux portions de glissière consécutives sensiblement linéaires dans lesquels circulent respectivement les galets venant de la poutre latérale d'encadrement de porte correspondante et chaque chemin de guidage inférieur présente une configuration de coudage avec un sommet.

De préférence, les chemins de guidage supérieurs présentent une butée interne d'extrémité haute et des portions sensiblement linéaires et inclinées jusqu'à une ouverture d'extrémité externe basse, et les chemins de guidage inférieurs présentent une butée basse d'extrémité interne couplée à une portion sensiblement verticale pourvue d'un sommet et prolongée par une portion sensiblement linéaire d'extrémité ouverte vers l'extérieur selon une inclinaison de pente inférieure à celles des portions des chemins de guidage supérieurs.

Selon des modes de réalisation particulièrement avantageux :
- le (chaque) levier de pivotement présente un chemin de guidage en coopération avec des ergots venant de la ferrure d'attache de porte, ce chemin de guidage présentant des rebords qui servent de rampe au verrou et au loquet;
- l'encadrement de porte présente des côtés latéraux qui sont solidaires ou qui intègrent les ferrures d'attache de porte;
- un ressort de compensation de masse de la porte est monté sur l'axe de rotation du levier de pivotement afin d'équilibrer la masse de la porte lors du pivotement;
- des butées auxiliaires sont fixées à l'angle de jonction des poutres latérales et de la poutre longitudinale d'encadrement de porte et à la poutre longitudinale d'encadrement de fuselage en regard, pour pallier une rupture de chemin de guidage supérieur.

L'invention se rapporte à une porte de secours de cabine d'avion dans un fuselage comportant un système d'ouverture tel que défini cidessus.

Dans le présent texte, le terme « galet » désigne aussi bien une pièce de roulement mobile en rotation lors de son déplacement sur une rampe ou dans un chemin de came, glissière, piste ou équivalent, qu'un doigt non rotatif, se déplaçant en translation. « Vertical » ou « horizontal » qualifie une direction parallèle à la direction de la gravité terrestre ou respectivement dans un plan perpendiculaire à cette direction. Les qualificatifs « supérieur » et « inférieur » se réfèrent à une localisation respectivement au-dessus et en-dessous du hublot de la porte. Le qualificatif « longitudinal » se réfère à la direction principale du fuselage de l'avion, « avant » et « arrière » aux qualificatifs usuels de localisation dans un avion, à savoir du côté du cockpit et du côté de la queue d'un avion. « Transversal » qualifie une étendue dans un plan perpendiculaire à la direction longitudinale du fuselage et « latéral » une étendue dans le fuselage selon une direction perpendiculaire à la direction longitudinale. Par ailleurs, des extrémités ou butées respectivement « haute » ou « basse » se réfèrent à une position relative la plus élevée ou la moins élevée dans un même élément, au sens de la plus éloignée ou la moins éloignée du sol. Les qualificatifs « montant » ou « descendant » signifient en déplacement vers le haut, c'est-à-dire en s'éloignant du sol, ou respectivement vers le bas en s'y rapprochant. De plus, « extérieur » ou « externe » (respectivement « intérieur » ou « interne ») qualifie une localisation située à l'extérieur (respectivement à l'intérieur) de la cabine d'avion, en d'autres termes hors (respectivement à l'intérieur) du fuselage de l'avion.

### PRÉSENTATION DES FIGURES

D'autres données, caractéristiques et avantages de la présente invention apparaîtront à la lecture de la description non limitée qui suit, en référence aux figures annexées qui représentent, respectivement :
- les figures 1a à 1d, des schémas de profil d'une porte de secours d'avion par rapport au profil du fuselage illustrant les étapes essentielles de la cinématique d'ouverture à rebroussement selon l'invention;
- les figures 2a et 2b, des vues en perspective de la porte de secours d'avion en position fermée, respectivement à partir de l'extérieur du fuselage et de l'intérieur de la cabine d'avion;
- les figures 3a et 3b, des agrandissements en perspective d'un exemple de système d'ouverture de porte selon l'invention tel que localisé en vues partielles sur des poutres latérales de l'encadrement de porte et du fuselage en regard ;
- les figures 4a à 4f, des vues en coupe dans des plans transversaux des guidages de liaison (schémas A et B) et des guidages de coopération (schémas C et D) de ce système d'ouverture mis en œuvre depuis l'état de verrouillage jusqu'à l'ouverture maximale de la porte, entre des instants de verrouillage / blocage (figure 4a), de déverrouillage (figure 4b), déblocage (figure 4c), de levage jusqu'au point de rebroussement (figure 4d), en fin d'extériorisation (figure 4e) et en prise de pivotement (figure 4f);
- la figure 5, une vue en coupe partielle de la porte en position de levage maximale, dans le plan transversal du schéma D, et
- la figure 6, une vue en perspective externe de la porte de secours en position de levage maximale.

### DESCRIPTION DETAILLÉE

Sur les figures, des signes de référence identiques renvoient à un même élément ainsi qu'aux passages de la description correspondants.

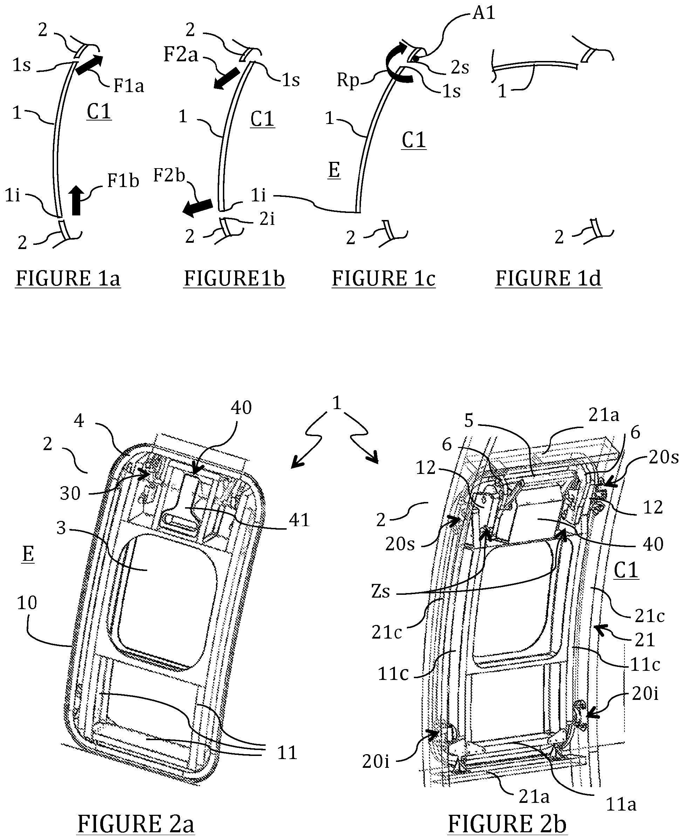

Les schémas des figures 1a à 1d illustrent un profil de porte de secours d'avion 1 qui se déplace en position par rapport au profil du fuselage fixe 2 d'un avion afin d'illustrer les étapes essentielles de la cinématique d'ouverture à rebroussement selon l'invention.

Sur le schéma de la figure 1a, la porte 1 est en position fermée et le profil de porte 1 est alors sensiblement aligné dans la continuité du profil de fuselage 2 qui l'entoure. La flèche F1a, pour le bord supérieur de porte 1s, et la flèche F1b, pour son bord inférieur 1i, indiquent le sens et l'orientation que la première étape dite de levage incliné va imprimer à la porte 1. Dans cette étape de levage incliné, le bord supérieur de porte 1s est déplacée vers l'intérieur de la cabine C1 (flèche F1a) alors que le bord inférieur 1i se déplace sensiblement verticalement vers le haut (flèches F1b).

La figure 1b illustre la position de la porte 1 par rapport au fuselage 2 suite au déplacement effectué lors de l'étape de levage, avec le bord 1s dans la cabine C1 et le bord 1i surélevé en regard du bord inférieur 2i du fuselage 2. Par rebroussement de mouvement, l'étape d'extériorisation qui suit consiste à translater la porte 1 selon une inclinaison sensiblement identique à celle de l'étape de levage mais en sens inverse (flèches F2a et F2b). Cette étape d'extériorisation prépare le bord inférieur 1i en position extérieure à la cabine C1 pour procéder au pivotement final dans des conditions sécurisées.

En effet, à la fin de l'étape d'extériorisation (figure 1c), le bord inférieure1i de la porte 1 est dégagé à l'extérieur de la cabine C1 - en d'autres termes dans l'espace « E » hors de l'avion - alors que le bord supérieur 1s est revenu au niveau du bord supérieur de fuselage 2s.

Le pivotement de la porte 1 (étape de pivotement) peut alors commencer par une rotation (flèche Rp) autour d'un axe de pivotement A1 positionné à proximité du bord supérieur 2s du fuselage 2. L'étape de pivotement se poursuit jusqu'à ce que la porte 1 ait atteint une position d'ouverture maximale par rapport au profil du de fuselage 2, comme illustré sur la figure 1d.

De manière plus réaliste, les vues en perspective des figures 2a et 2b illustrent la porte de secours d'avion 1 en position fermée, respectivement à partir de l'extérieur « E » du fuselage 2 et de l'intérieur de la cabine C1.

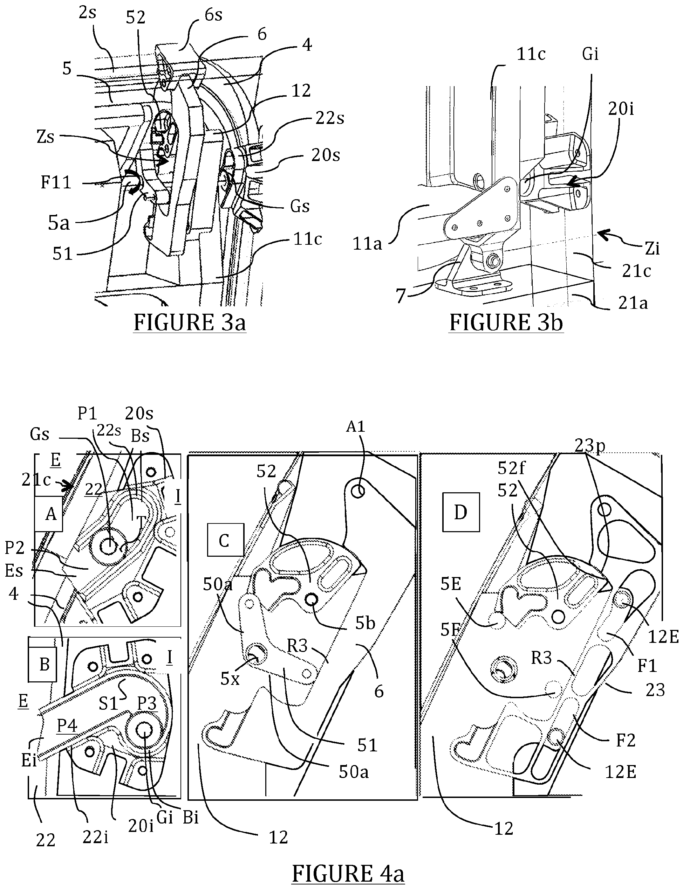

La porte de secours 1 comporte un hublot 3 et est positionnée dans une découpe 10 réalisée dans le fuselage 2. Un joint d'étanchéité 4 (qui apparaît également sur les figures 3a et 4a à 4f, schémas A et B) est fixé en bordure de la porte 1 et court le long de la découpe 10 lorsque la porte est en position fermée. Un boitier étanche 40 loge une poignée de commande d'ouverture externe 41.

A l'intérieur de la cabine C1, les bords de porte 1 et de fuselage 2 disposés en regard autour de la découpe 10 comportent respectivement des poutres d'encadrements de porte et de fuselage, respectivement, 11 et 21, qui s'étendent longitudinalement et latéralement, à savoir: deux poutres longitudinales supérieures et inférieures, 11a et 21a, ainsi que deux poutres latérales avant et arrière, respectivement 11c et 21c, joignant les poutres longitudinales correspondantes.

Le système d'ouverture de la porte de secours 1 comporte une poignée de commande d'ouverture 5 et un mécanisme d'ouverture de porte 30. Ce mécanisme 30 fait intervenir des leviers de pivotement 6 et des ferrures d'attache latérales de porte 12 agencées dans les zones d'angle supérieures de porte Zs, localisées au niveau des - ou, alternativement, intégrées aux - poutres latérales d'encadrement de porte 11c.

De plus, des chemins de guidage supérieurs et inférieurs, 20s et 20i, sont montés sur les poutres latérales 21c de l'encadrement de fuselage 21 - à proximité de leurs extrémités supérieures et inférieures - et en regard des poutres latérales 11c de l'encadrement de porte 11.

Les figures 3a et 3b illustrent des agrandissements du système d'ouverture selon des vues partielles en perspective, respectivement localisés dans les zones d'angle supérieures et inférieures, Zs et Zi, de la poutre latérale 11c d'encadrement de porte 11 en regard de la poutre latérale 21c du fuselage 2.

En référence à la figure 3a, la poignée de commande 5 entraîne en rotation (flèche F11) l'arbre 5a qui entraîne à son tour le verrou de verrouillage/déverrouillage 51 en combinaison avec le loquet de blocage/déblocage 52.

Ces éléments de verrou 51 et de loquet 52, également appelés « intermédiaires de mouvement », coopèrent avec le levier de pivotement 6 - articulé en rotation par un support 6s fixé sur le bord supérieur 2s du fuselage 2 - pour agir sur la ferrure d'attache de porte 12 (cf. figures 4a à 4f). Un guidage de liaison supérieur, dans les zones d'angle supérieures Zs, est réalisé entre un galet supérieur Gs venant de la ferrure d'attache de porte 12 (ou, alternativement, de la poutre latérale d'encadrement de porte 11c faisant fonction de ferrure d'attache) et coulissant dans le chemin de guidage supérieur 20s monté dans la poutre latérale 21c d'encadrement de fuselage.

En référence à la figure 3b, un guidage de liaison inférieur est réalisé dans les zones d'angle inférieures Zi, entre les poutres latérales de porte 11c et de fuselage 21c par un galet inférieur Gi venant de la poutre latérale de porte 11c pour coulisser dans le chemin de guidage inférieur 20i monté dans la poutre latérale de fuselage 21c en regard.

De plus, une butée auxiliaire inférieure 7 est fixée à l'angle de jonction des poutres latérales 11c et de la poutre longitudinale d'encadrement de porte 11a, et à la poutre longitudinale d'encadrement de fuselage 21a en regard. Cette butée auxiliaire inférieure 7 permet de pallier la rupture du chemin de guidage inférieur 20i correspondant. Une fonction équivalente est assurée en localisation supérieure de la porte 1 par le levier de pivotement 6 pour pallier une rupture de chemin de guidage supérieur 20s (cf. figure 2b).

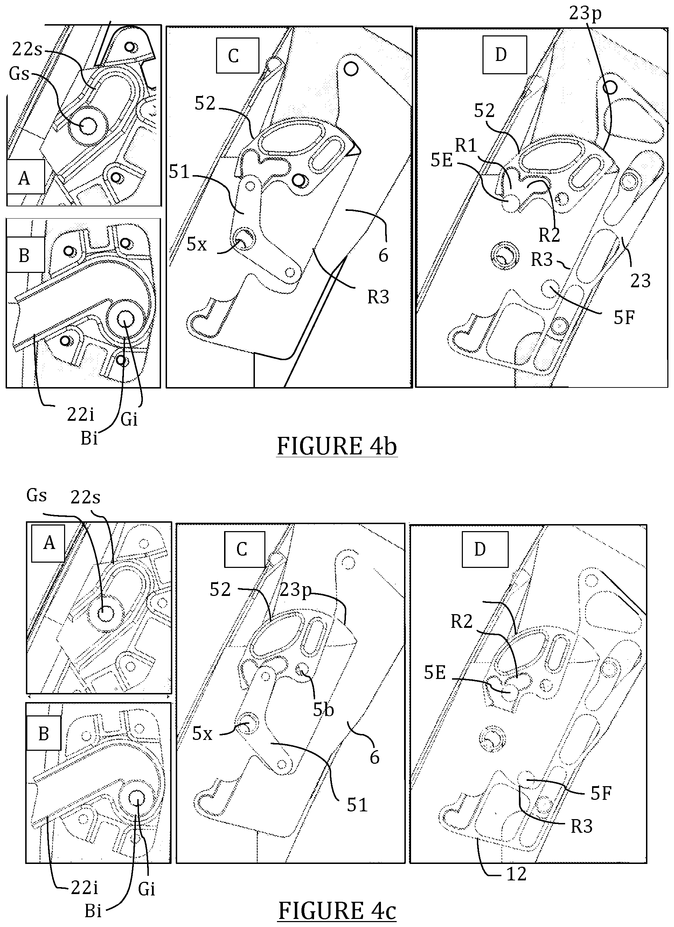

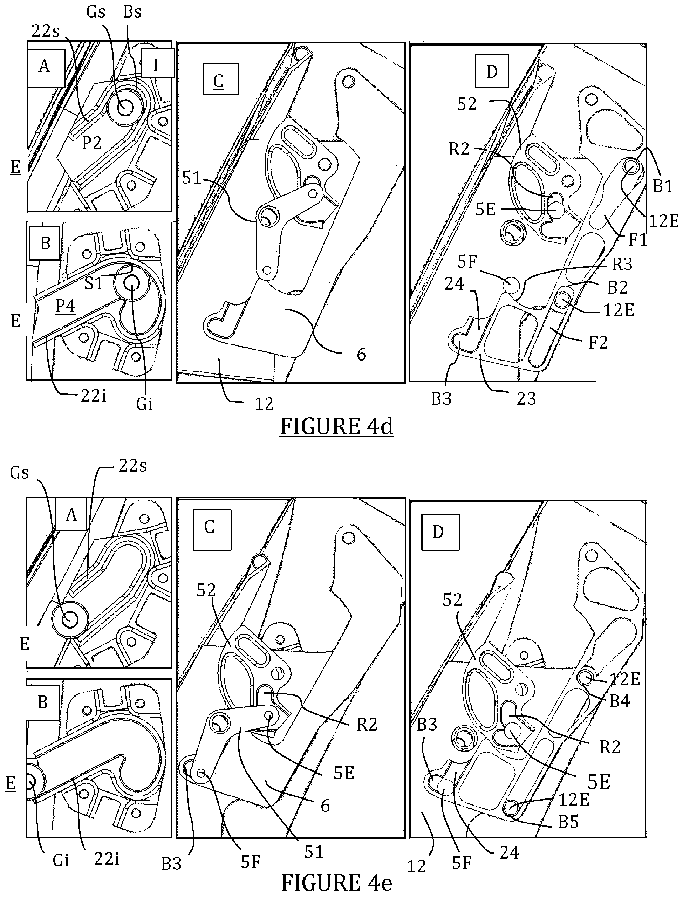

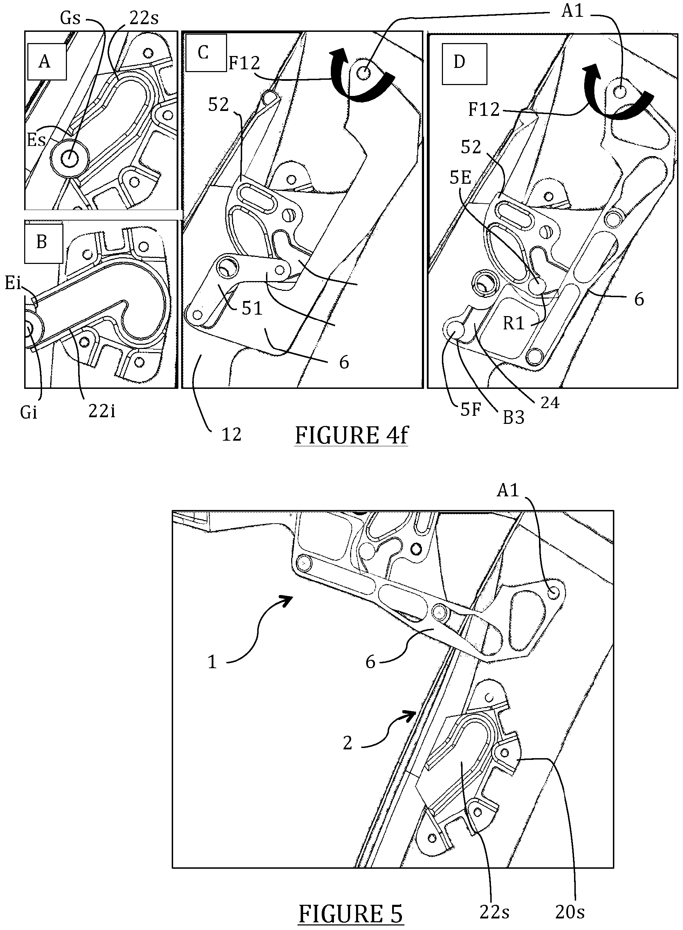

Le système d'ouverture de porte de secours est maintenant décrit de manière détaillée par les vues en coupe des figures 4a à 4f dans des plans transversaux des guidages de liaison (schémas A et B) et des guidages de coopération (schémas C et D). Plus précisément, ces vues illustrent le système d'ouverture depuis le verrouillage jusqu'à l'ouverture maximale de la porte, aux instants de verrouillage / blocage (figure 4a), de déverrouillage (figure 4b), déblocage (figure 4c), au point de rebroussement (figure 4d), en fin d'extériorisation (figure 4e) et en fin d'ouverture (figure 4f).

En référence aux schémas A et B des figures 4a à 4c - la porte 1 restant en position fermée et le mécanisme d'ouverture verrouillé et bloqué (cf. les figures précédentes) - les galets Gs se trouvent à mi-chemin dans chaque glissière 22s du chemin de guidage supérieur de liaison 20s, à savoir au niveau d'une ligne de transition « T ». Et les galets Gi se trouvent simultanément en butée basse Bi de chaque glissière 22i du chemin de guidage inférieur de liaison 20i.

Plus précisément, chaque chemin de guidage supérieur 20s (schéma A), monté sur une face transversale 22 de poutre latérale d'encadrement de fuselage 21c, présente une glissière 22s formée de deux portions linéaires, P1 et P2, qui se succèdent autour de la ligne de transition « T ». Les portions P1 et P2 ont des pentes d'inclinaison de même signe et d'amplitude légèrement différente: la portion P1 située vers l'intérieur « I » de cabine possède une pente plus inclinée - par rapport à une ligne horizontale - que celle de la portion P2 située vers l'extérieur « E » du fuselage 2. La différence d'amplitude d'inclinaison entre les portions P1 et P2 dépend des configurations de fuselage, ces portions pouvant avoir une même inclinaison. La portion P1 se termine vers l'intérieur par une butée haute Bs et la portion P2 par une ouverture Es vers l'extérieur « E ».

En outre, chaque glissière 22i (schéma B) des chemins de guidage inférieur 20i, montés également sur la face transversale 22, présente une configuration en coude avec, de l'intérieur « I » vers l'extérieur « E », une portion P3 sensiblement verticale à partir de la butée basse interne Bi, un sommet S1 formant une butée haute et une portion P4 linéaire inclinée se terminant par une ouverture Ei vers l'extérieur « E ». Cette portion P4 présente une pente d'inclinaison ayant une amplitude légèrement plus faible (par rapport à une ligne horizontale) que celle de la portion P2 de la glissière supérieure 22s.

Sur les schémas C et D de la figure 4a, apparaissent le verrou 51 et le loquet 52 ayant comme axes de rotation - portés par la ferrure d'attache de porte 12 - respectivement l'axe 5x de l'arbre longitudinal 5a entraîné par la poignée de commande 5 (cf. figure 3a), et un axe 5b parallèle à l'axe 5x.

Le verrou 51 présente deux ailes 50a, terminées par deux ergots 5E et 5F. L'ergot 5E est bloqué contre le loquet 52 et l'ergot 5F est à proximité de la portion « verticale » d'une rampe R3 en « L » formée par le levier de pivotement 6 qui intègre un chemin de guidage de coopération 23 (schéma D). Une face 52f du loquet 52 est bloquée contre une paroi 23p connexe à la rampe R3. Ainsi, le verrou 51 et le loquet 52 sont en position d'immobilisation (verrouillage/blocage) de la ferrure d'attache de porte 12: des ergots 12E de ladite ferrure 12 sont bloqués à mi-chemin de fenêtres F1, F2 formées dans le chemin de guidage de coopération 23 du levier de pivotement 6. Ces ergots 12E restent également dans cette position sur les schémas C et D des figures 4b et 4c, c'est-à-dire tant que le mécanisme d'ouverture est verrouillé et/ou bloqué.

En référence aux schémas C et D de la figure 4b, une action sur la poignée de commande 5 (cf. figure 3a) entraîne le déverrouillage sans déblocage du système d'ouverture. Le verrou 51 a tourné autour de son axe de rotation 5x de sorte que l'ergot 5E est en position de pouvoir circuler dans des chemins de roulement R1 et R2 intégrés au loquet 52. L'ergot 5F du verrou 51 reste à proximité de la portion « verticale » de la rampe R3 en forme de « L ». Le loquet 52 reste bloqué contre la paroi 23p connexe de la rampe R3 du levier de pivotement 6.

Sur la figure 4c de déblocage du mécanisme d'ouverture, le loquet 52 est dégagé de la paroi de blocage connexe 23p suite à la rotation du loquet 52 en combinaison avec celle du verrou 51, la distance entre leurs axes 5x et 5b étant déterminée pour réaliser cette rotation combinée. L'ergot 5E du verrou 51 pénètre simultanément dans le chemin de roulement R2 du loquet 52. L'autre ergot 5F du verrou 51 vient glisser le long de la portion « horizontale » de la rampe R3 en « L » du levier de pivotement 6.

Suite au déblocage, le mécanisme d'ouverture se poursuit par l'étape de levage inclinée de porte via celle de la ferrure d'attache 12. La figure 4d illustre la fin de cette étape de levage vers l'intérieur de la cabine jusqu'au point de rebroussement. Le galet supérieur Gs coulisse dans la portion inclinée vers l'intérieur « I » de la portion linéaire P1 (cf. schéma A de la figure 4a) de la glissière 22s jusqu'à atteindre la butée haute Bs (schéma A). Simultanément, le galet inférieur Gi atteint le sommet S1 de la glissière inférieure 22i (schéma B).

Les positions des galets Gs et Gi dans les glissières 22s et 22i correspondent à une position de l'ergot 5F du verrou 51 en fin de glissement sur le petit côté de la rampe R3 du levier de pivotement 6 (schéma C). La ferrure d'attache de porte 12 ayant suivie le levage de porte, les ergots 12E de cette ferrure d'attache 12 atteignent ou se rapprochent des butées hautes B1 et B2 des fenêtres F1 et F2 du chemin de coopération 23 (schéma D) du levier de pivotement 6. Le mécanisme d'ouverture a atteint son point de rebroussement, correspondant à la position du galet Gs contre la butée haute Bs.

En effet, l'étape d'extériorisation de la porte se déroule ensuite par coulissement en sens inverse du galet Gs et donc en rebroussement alors que le galet Gi poursuit son mouvement « coudé » autour du sommet S1, respectivement dans les portions inclinées P2 et P4 des glissières 22s et 22i vers l'extérieur « E » (schémas A et B). Simultanément, l'ergot 5F du verrou 51 se dirige vers une glissière 24 du levier de pivotement 6 qui se termine par une butée de verrouillage B3 (schémas C et D).

A la fin de l'étape d'extériorisation, les positions des galets Gs, Gi des glissières 22s et 22i et des ergots 5E et 5F du verrou 51 se présentent comme illustrées par la figure 4e: les galets Gs et Gi se retrouvent en fin de coulissement incliné vers le bas, c'est-à-dire au niveau des ouvertures en quasi déconnexion des glissières 22s et 22i (schémas A et B), et donc prêts à être libérés vers l'extérieur « E ».

L'ergot de verrou 5E sort du chemin de roulement R2 du loquet 52 et l'ergot de verrou 5F vient se positionner à proximité de la butée de verrouillage B3 du levier de pivotement 6. La porte 1 (cf. figure 2b) et sa ferrure d'attache 12 ayant également coulissé vers le bas, les ergots 12E (schémas C et D) de cette ferrure d'attache 12 se retrouvent contre les butées basses B4 et B5 des fenêtres F1 et F2 du levier de pivotement 6.

Suite à l'étape d'externalisation, le pivotement de la porte 1 (cf. figure 2b) est prêt à s'enclencher, une fois la ferrure d'attache de porte 12 verrouillée sur le levier de pivotement 6 comme illustré par la figure 4f. A cet instant, alors que les galets Gs, Gi sont encore au niveau des ouvertures Es et Ei des glissières 22s et 22i (schémas A et B), l'ergot 5F du verrou 51 est immobilisé dans la butée de verrouillage B3 et son autre ergot 5E est bloqué en butée sur le chemin de roulement R1 du loquet 52 (schémas C et D): la ferrure d'attache 12 est rendue solidaire du levier de pivotement 6 par ce verrouillage/blocage des intermédiaires de mouvement, verrou 51 combiné au loquet 52.

Le levier de pivotement 6 va alors entraîner la ferrure d'attache de porte 12 et donc la porte 1 en rotation autour de l'axe de pivotement A1 du levier de pivotement 6 (flèche F12). Comme illustré par la vue en coupe partielle de la figure 5, située dans le plan transversal du schéma D, le levier de pivotement 6 ouvre la porte de secours 1 jusqu'à une position de levage maximale. L'amplitude de l'ouverture de la porte de secours 1 peut être appréciée par référence au fuselage 2 et à la glissière 22s du chemin de guidage supérieur de liaison 20s, également représentés.

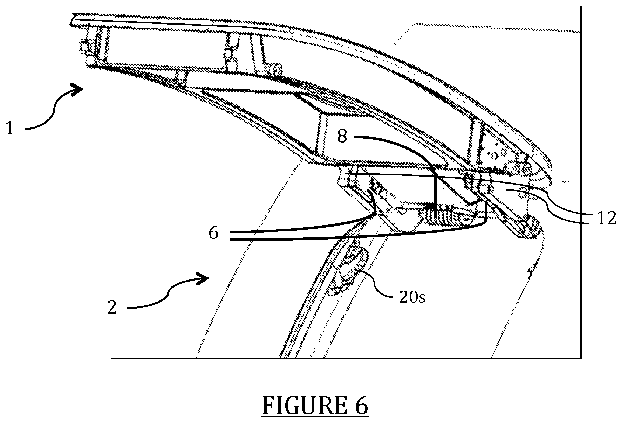

A partir de la vue en perspective venant de l'extérieur « E », la figure 6 montre également la porte de secours 1 dans la position d'ouverture maximale par rapport au fuselage 2. Sur cette vue, apparaissent également un ressort de compensation 8 - destiné à équilibrer, par sa compression, la masse de la porte 1 lors de son ouverture -, les ferrure d'attache de porte 12, les leviers de pivotement 6 et un chemin de guidage supérieur 20s de liaison avec la ferrure d'attache 12 correspondante.

L'invention n'est pas limitée aux exemples de réalisation décrits et représentés. Ainsi, d'autres chemins de guidage de liaison (entre les poutres latérales d'encadrement de porte et de fuselage) peuvent être utilisés en configuration et en nombre. Par ailleurs, le nombre d'intermédiaires de mouvement peut être supérieur à deux. Les pentes des glissières des chemins de guidage sont adaptées en fonction de la configuration du fuselage ou de la porte.

## Revendications

1. Procédé d'ouverture d'une porte de secours (1) de cabine d'avion (C1) dans un fuselage (2), selon une cinématique d'ouverture de porte agencée dans une découpe (10) du fuselage (2), à partir d'un état initial de porte (1) en position fermée de profil aligné avec le fuselage (2), tel qu'il consiste à effectuer la suite d'étapes suivantes, générées successivement par l'action d'une commande d'ouverture (5) : une étape d'activation d'intermédiaires de mouvement (51, 52), pour déverrouiller et débloquer une transmission de commande en pivotement (6) via une rotation combinée entre ces intermédiaires de mouvement (51, 52) comportant un premier (51) et un deuxième (52) intermédiaire de mouvement, respectivement de verrouillage-déverrouillage et de blocage-déblocage, le premier intermédiaire (51) ayant une fonction de verrouillage libérable du deuxième intermédiaire( 52) et le deuxième (52) une fonction de blocage de l'accès au mouvement qui est libéré une fois le premier intermédiaire (51) désarmé et ces intermédiaires de mouvement (51, 52) ayant des axes de rotation longitudinaux (5x, 5b) portés par la porte (1) à distance adaptée pour permettre cette rotation combinée, une étape de levage incliné ainsi générée en liaison avec le fuselage (2) par un coulissement incliné du bord supérieur (1s) de la porte (1) vers l'intérieur de cabine (I) et un coulissement simultané d'élévation de son bord inférieur (1i), suivie, par rebroussement de mouvement, d'une étape d'extériorisation du bord inférieur de porte (1i) hors de la cabine (C1) par un coulissement incliné des bords supérieur et inférieurs (1s, 1i) de la porte (1) en sens inverse et sensiblement selon une même inclinaison que celle du bord supérieur (1s) dans l'étape de levage, rétablissant simultanément le bord supérieur (1s) de la porte (1) au niveau du fuselage (2), et une étape finale de pivotement de la porte (1) par un verrouillage et un blocage de la transmission de commande (6) sur la porte (1) qui est alors entraînée en pivotement autour d'un axe de rotation longitudinal du fuselage (A1), les coulissements étant réalisés par des guidages supérieurs (20s) et inférieurs (20i) de liaison entre des encadrements (11, 21) de la porte (1) et du fuselage (2) en regard, ainsi que par des guidages de coopération (12E, 23) de la transmission de commande (6) avec la porte (1).

2. Procédé d'ouverture selon la revendication 1, dans lequel l'étape d'activation des intermédiaires de mouvement (51, 52) sur la transmission de commande (6) débute par une phase de déverrouillage produite par une rotation combinée des intermédiaires de mouvement (51, 52) à partir d'une position de verrouillage-blocage, ce déverrouillage entraînant un déblocage des guidages de coopération (23, 12E) de la transmission de commande (6) avec la porte (1) et des guidages de liaison (Gs, 20s; Gi, 20i) entre les encadrements (11, 21).

3. Procédé d'ouverture selon l'une quelconque des revendications précédentes, dans lequel l'étape de levage incliné de la porte (1) est générée par des trajectoires simultanées vers l'intérieur de cabine (P1) des guidages supérieurs de liaison (20s), et vers le haut (P3) des guidages inférieurs de liaison (20i), partant d'une position intermédiaire (T) sur les guidages supérieurs (20s) et d'une position en butée basse (Bi) sur les guidages inférieurs de liaison (20i) jusqu'à une position en butées hautes (Bs, S1) sur ces guidages de liaison (20s, 20i) définissant le rebroussement, alors qu'un coulissement de la porte (1) se produit simultanément dans le guidage de coopération (23, 12E) de la transmission de commande (6) jusqu'à une position de butée haute (B1, B2).

4. Procédé d'ouverture selon l'une quelconque des revendications précédentes, dans lequel dans l'étape d'extériorisation de la porte (1), les guidages supérieurs (20s) et inférieurs (20i) de liaison empruntent, en sens inverse et jusqu'à leur déconnexion (Es, Ei), des trajectoires (P2, P4) d'inclinaison inférieure ou égale à l'inclinaison des trajectoires (P1) des guidages supérieurs de liaison (20s) dans l'étape de levage et, simultanément, la porte (1) coulisse vers le bas sur le guidage de coopération (23) à partir de la position haute (B1, B2) jusqu'à atteindre une butée basse (B4, B5) puis, en fin de coulissement, le guidage de coopération (23) de la porte (1) sur la transmission de commande (6) est verrouillée-bloquée par les intermédiaires de mouvement (51, 52) en position de butée de verrouillage (B3) correspondant à la position initiale de pivotement de la porte (1).

5. Procédé d'ouverture selon l'une quelconque des revendications précédentes, dans lequel l'étape finale de pivotement de la porte (1) débute par l'entraînement de la porte (1) verrouillée-bloquée sur la transmission de commande (6) par la commande d'ouverture (5) autour de l'axe de rotation (A1) de la transmission de commande (6) jusqu'à atteindre une position extrême prédéterminée.

6. Procédé d'ouverture selon l'une quelconque des revendications précédentes, dans lequel une compensation de masse (8) de la porte (1) est prévue afin d'équilibrer cette masse lors de l'étape finale de levage.

7. Système d'ouverture de porte de secours (1) positionnée dans un fuselage d'avion (2) de mise en œuvre du procédé selon l'une quelconque des revendications précédentes, ce système comportant des encadrements respectifs de porte et de fuselage (11, 21) qui s'étendent en regard, au moins un couple verrou/loquet (51, 52), une ferrure d'attache de porte (12) et des chemins de guidage supérieurs et inférieurs montés dans l'encadrement de fuselage (21), ce système d'ouverture étant tel qu'il comporte une poignée de commande (5) de mise en rotation combinée d'au moins le couple verrou/loquet (51, 52) de (dé)verrouillage / (dé)blocage, et un mécanisme d'ouverture (30) équipé, dans au moins une zone d'angle supérieure (Zs) de la porte (1), d'un levier de pivotement (6) articulé en rotation (A1) sur un bord supérieur de fuselage (2s) et muni de chemins de guidage à glissières (23; F1, F2; 23p, 24) en coopération avec le couple verrou/loquet (51, 52) et avec la ferrure d'attache de porte (12), le verrou (51) présentant deux ergots d'extrémité (5E, 5F), un ergot (5E) apte à circuler dans des chemins de guidage (R1, R2) intégrés au loquet (52) et un ergot (5F) apte à glisser sur une portion de la rampe (R3) de configuration terminée par une butée de verrouillage (B3), le loquet (52) présentant une face (52f) apte à coopérer avec une paroi connexe (23p) d'une rampe (R3) du levier de pivotement (6), de galets supérieurs (Gs) et inférieurs (Gi) montés dans l'encadrement latéral de porte (11c) pour former des moyens de guidage en liaison avec des chemins de guidage correspondants (20s, 22s; 20i, 22i) montés dans l'encadrement de fuselage en regard (21c), les chemins de guidage supérieurs (20s, 22s) étant globalement inclinés vers l'intérieur de cabine (I) en montant et les chemins de guidage inférieurs (20i, 22i) coudés, et tel que chaque chemin de guidage supérieur (20s) présente deux portions de glissière consécutives (P1, P2) sensiblement linéaires dans lesquels circulent respectivement les galets (Gs) venant de la poutre latérale (11c) d'encadrement de porte correspondante (11) et chaque chemin de guidage inférieur (20i) présente une configuration de coudage (P3, P4) avec un sommet (S1).

8. Système d'ouverture selon la revendication précédente, dans lequel les chemins de guidage supérieurs (20s, 22s) présentent une butée interne d'extrémité haute (Bs) et des portions (P1, P2) sensiblement linéaires et inclinées jusqu'à une ouverture d'extrémité externe basse (Es), et les chemins de guidage inférieurs (20i, 22i) présentent une butée basse d'extrémité interne (Bi) couplée à une portion sensiblement verticale (P3) pourvue d'un sommet (S1) et prolongée par une portion sensiblement linéaire (P4) d'extrémité ouverte (Ei) vers l'extérieur (E) selon une inclinaison de pente inférieure à celles des portions (P1, P2) des chemins de guidage supérieurs (20s, 22s).

9. Système d'ouverture selon l'une quelconque des revendications 7 à 8, dans lequel le (chaque) levier de pivotement (6) présente un chemin de guidage (23) en coopération avec des ergots (12E) venant de la ferrure d'attache de porte (12), ce chemin de guidage (23) présentant des rebords qui servent de rampe (R3, 23p) au verrou (51) et au loquet (52).

10. Système d'ouverture selon l'une quelconque des revendications 7 à 9, dans lequel l'encadrement de porte (11) présente des côtés latéraux (11c) qui sont solidaires ou qui intègrent les ferrures d'attache de porte (12).

11. Système d'ouverture selon l'une quelconque des revendications 7 à 10, dans lequel un ressort de compensation de masse (8) de la porte (1) est monté sur l'axe de rotation (A1) du levier de pivotement (6) afin d'équilibrer la masse de la porte (1) lors du pivotement.

12. Système d'ouverture selon l'une quelconque des revendications 7 à 11, dans lequel des butées auxiliaires (7) sont fixées à l'angle de jonction des poutres latérales (11c) et de la poutre longitudinale d'encadrement de porte (11a) et à la poutre longitudinale d'encadrement de fuselage en regard (21a).

13. Porte de secours (1) de cabine d'avion (C1) dans un fuselage (2), **caractérisée en ce qu'**elle comporte un système d'ouverture selon l'une quelconque des revendications 7 à 12.

## Patentansprüche

1. Verfahren zum Öffnen einer Nottür (1) einer Flugzeugkabine (C1) in einem Rumpf (2) gemäß einer Öffnungskinematik einer Tür, die in einem Ausschnitt (10) des Rumpfes (2) angeordnet ist, ausgehend von einem Anfangszustand der Tür (1) in geschlossener Position mit einem mit dem Rumpf (2) bündigen Profil, darin bestehend, die Abfolge folgender Schritte auszuführen, die nacheinander durch die Wirkung eines Öffnungssteuerungselements (5) erzeugt werden: einen Schritt der Aktivierung von Bewegungsvermittlern (51, 52), um ein Schwenksteuerungsübertragungselement (6) über eine kombinierte Drehung zwischen diesen Bewegungsvermittlern (51, 52) zu entriegeln und zu entblockieren, die einen ersten (51) und einen zweiten (52) Bewegungsvermittler zum Verriegeln-Entriegeln bzw. zum Blockieren-Entblockieren umfassen, wobei der erste Vermittler (51) eine Funktion der freigebbaren Verriegelung des zweiten Vermittlers (52) aufweist und der zweite (52) eine Funktion des Blockierens des Zugangs zu der Bewegung, welcher freigegeben wird, nachdem der erste Vermittler (51) entspannt ist, und wobei diese Bewegungsvermittler (51, 52) von der Tür (1) getragene, längs verlaufende Drehachsen (5x, 5b) in einem Abstand aufweisen, der geeignet ist, diese kombinierte Drehung zu ermöglichen, einen so in Verbindung mit dem Rumpf (2) erzeugten Schritt des schrägen Hebens durch ein schräges Gleiten des oberen Randes (1s) der Tür (1) in Richtung des Kabineninnenraums (I) und ein gleichzeitiges Hinaufgleiten ihres unteren Randes (1i), gefolgt, durch Bewegungsumkehr, von einem Schritt der Hinausbewegung des unteren Türrandes (1i) aus der Kabine (C1) durch ein schräges Gleiten des oberen und unteren Randes (1s, 1i) der Tür (1) in umgekehrter Richtung und im Wesentlichen mit derselben Neigung, wie diejenige des oberen Randes (1s) im Schritt des Hebens, wobei gleichzeitig der obere Rand (1s) der Tür (1) zum Niveau des Rumpfes (2) zurückbewegt wird, und einen abschließenden Schritt der Schwenkung der Tür (1) durch eine Verriegelung und eine Blockierung des Steuerungsübertragungselements (6) an der Tür (1), welche dann um eine längs verlaufende Drehachse des Rumpfes (A1) schwenkend angetrieben wird, wobei die Gleitbewegungen durch obere (20s) und untere Führungen (20i) zur Verbindung zwischen gegenüberliegenden Rahmen (11, 21) der Tür (1) und des Rumpfes (2) realisiert werden, sowie durch Führungen zum Zusammenwirken (12E, 23) des Steuerungsübertragungselements (6) mit der Tür (1).

2. Verfahren zum Öffnen nach Anspruch 1, wobei der Schritt der Aktivierung der Bewegungsvermittler (51, 52) an dem Steuerungsübertragungselement (6) mit einer Phase der Entriegelung beginnt, die durch eine kombinierte Drehung der Bewegungsvermittler (51, 52) ausgehend von einer Position der Verriegelung-Blockierung erzeugt wird, wobei diese Entriegelung eine Entblockierung der Führungen zum Zusammenwirken (23, 12E) des Steuerungsübertragungselements (6) mit der Tür (1) und der Führungen zur Verbindung (Gs, 20s; Gi, 20i) zwischen den Rahmen (11, 21) zur Folge hat.

3. Verfahren zum Öffnen nach einem der vorhergehenden Ansprüche, wobei der Schritt des schrägen Hebens der Tür (1) durch gleichzeitige Trajektorien der oberen Verbindungsführungen (20s) in Richtung des Kabineninnenraums (P1) und der unteren Verbindungsführungen (20i) nach oben (P3) erzeugt wird, ausgehend von einer Zwischenposition (T) an den oberen Führungen (20s) und von einer Position an einem unteren Anschlag (Bi) an den unteren Verbindungsführungen (20i), bis zu einer Position an oberen Anschlägen (Bs, S1) an diesen Verbindungsführungen (20s, 20i), welche die Umkehr definiert, während ein Gleiten der Tür (1) gleichzeitig in der Führung zum Zusammenwirken (23, 12E) des Steuerungsübertragungselements (6) bis zu einer Position des oberen Anschlags (B1, B2) erfolgt.

4. Verfahren zum Öffnen nach einem der vorhergehenden Ansprüche, wobei im Schritt der Hinausbewegung der Tür (1) die oberen (20s) und unteren Verbindungsführungen (20i), in umgekehrter Richtung und bis zur Trennung ihrer Verbindung (Es, Ei), Trajektorien (P2, P4) mit einer Neigung folgen, die kleiner oder gleich der Neigung der Trajektorien (P1) der oberen Verbindungsführungen (20s) im Schritt des Hebens ist, und gleichzeitig die Tür (1) auf der Führung zum Zusammenwirken (23) ausgehend von der hohen Position (B1, B2) nach unten gleitet, bis sie einen unteren Anschlag (B4, B5) erreicht, und danach, am Ende des Gleitens, die Führung zum Zusammenwirken (23) der Tür (1) am Steuerungsübertragungselement (6) durch die Bewegungsvermittler (51, 52) in einer Verriegelungs-Anschlagposition (B3) verriegelt-blockiert wird, die der Anfangsposition der Schwenkung der Tür (1) entspricht.

5. Verfahren zum Öffnen nach einem der vorhergehenden Ansprüche, wobei der abschließende Schritt der Schwenkung der Tür (1) durch den Antrieb der am Steuerungsübertragungselement (6) verriegeltenblockierten Tür (1) durch das Öffnungssteuerungselement (5) um die Drehachse (A1) des Steuerungsübertragungselements (6) beginnt, bis eine vorbestimmte äußerste Position erreicht wird.

6. Verfahren zum Öffnen nach einem der vorhergehenden Ansprüche, wobei ein Massenausgleich (8) der Tür (1) vorgesehen ist, um diese Masse während des abschließenden Schrittes des Hebens auszugleichen.

7. System zum Öffnen einer in einem Flugzeugrumpf (2) positionierten Nottür (1) zur Durchführung des Verfahrens nach einem der vorhergehenden Ansprüche, wobei dieses System jeweilige Rahmen der Tür und des Rumpfes (11, 21), die sich einander gegenüberliegend erstrecken, wenigstens ein Paar Riegel/Klinke (51, 52), einen Türanschlussbeschlag (12) und im Rumpfrahmen (21) angebrachte obere und untere Führungsbahnen umfasst, wobei dieses System zum Öffnen so beschaffen ist, dass es einen Steuergriff (5) zum Versetzen wenigstens des Paares Riegel/Klinke (51, 52) in kombinierte Drehung zur Verriegelung (Entriegelung) / Blockierung (Entblockierung) und einen Öffnungsmechanismus (30) umfasst, der in wenigstens einem oberen Winkelbereich (Zs) der Tür (1) mit einem Schwenkhebel (6) ausgestattet ist, der an einem oberen Rumpfrand (2s) drehbar angelenkt (A1) ist und mit Gleitführungsbahnen (23; F1, F2; 23p, 24) versehen ist, die mit dem Paar Riegel/Klinke (51, 52) und mit dem Türanschlussbeschlag (12) zusammenwirken, wobei der Riegel (51) zwei End-Vorsprünge (5E, 5F) aufweist, einen Vorsprung (5E), der geeignet ist, sich in Führungsbahnen (R1, R2) zu bewegen, die in die Klinke (52) integriert sind, und einen Vorsprung (5F), der geeignet ist, auf einem Abschnitt der Rampe (R3) mit einer Konfiguration, die durch einen Verriegelungsanschlag (B3) beendet wird, zu gleiten, wobei die Klinke (52) eine Seite (52f) aufweist, die geeignet ist, mit einer Wand (23p) zusammenzuwirken, die einer Rampe (R3) des Schwenkhebels (6) benachbart ist, wobei obere (Gs) und untere (Gi) Rollen im seitlichen Türrahmen (11c) angebracht sind, um in Verbindung mit entsprechenden Führungsbahnen, (20s, 22s; 20i, 22i), die im gegenüberliegenden Rumpfrahmen (21c) angebracht sind, Führungsmittel zu bilden, wobei die oberen Führungsbahnen (20s, 22s) im Wesentlichen zum Kabineninnenraum (I) hin ansteigend geneigt und die unteren Führungsbahnen (20i, 22i) abgewinkelt sind, und so, dass jede obere Führungsbahn (20s) zwei aufeinander folgende, im Wesentlichen gerade Gleitführungsabschnitte (P1, P2) aufweist, in denen sich jeweils die Rollen (Gs) von dem entsprechenden seitlichen Träger (11c) des Türrahmens (11) bewegen, und jede untere Führungsbahn (20i) eine abgewinkelte Konfiguration (P3, P4) mit einem Scheitelpunkt (S1) aufweist.

8. System zum Öffnen nach dem vorhergehenden Anspruch, wobei die oberen Führungsbahnen (20s, 22s) einen oberen inneren Endanschlag (Bs) und im Wesentlichen gerade und geneigte Abschnitte (P1, P2) bis zu einer unteren äußeren Endöffnung (Es) aufweisen und die unteren Führungsbahnen (20i, 22i) einen unteren inneren Endanschlag (Bi) aufweisen, der mit einem im Wesentlichen vertikalen Abschnitt (P3) gekoppelt ist, der mit einem Scheitelpunkt (S1) versehen ist und durch einen im Wesentlichen geraden Abschnitt (P4) mit einem zur Außenseite (E) hin offenen Ende (Ei) verlängert wird, mit einer Neigung, die kleiner als diejenige der Abschnitte (P1, P2) der oberen Führungsbahnen (20s, 22s) ist.

9. System zum Öffnen nach einem der Ansprüche 7 bis 8, wobei der (jeder) Schwenkhebel (6) eine Führungsbahn (23) aufweist, die mit vom Türanschlussbeschlag (12) kommenden Vorsprüngen (12E) zusammenwirkt, wobei diese Führungsbahn (23) Randleisten aufweist, die als Rampe (R3, 23p) für den Riegel (51) und für die Klinke (52) dienen.

10. System zum Öffnen nach einem der Ansprüche 7 bis 9, wobei der Türrahmen (11) laterale Seiten (11c) aufweist, welche mit den Türanschlussbeschlägen (12) fest verbunden sind oder in welche diese integriert sind.

11. System zum Öffnen nach einem der Ansprüche 7 bis 10, wobei eine Feder zum Massenausgleich (8) der Tür (1) auf der Drehachse (A1) des Schwenkhebels (6) gelagert ist, um die Masse der Tür (1) während der Schwenkung auszugleichen.

12. System zum Öffnen nach einem der Ansprüche 7 bis 11, wobei Hilfsanschläge (7) am Verbindungswinkel der seitlichen Träger (11c) und des Längsträgers (11a) des Türrahmens und am gegenüberliegenden Längsträger (21a) des Rumpfrahmens befestigt sind.

13. Nottür (1) einer Flugzeugkabine (C1) in einem Rumpf (2), **dadurch gekennzeichnet, dass** sie ein System zum Öffnen nach einem der Ansprüche 7 bis 12 umfasst.

## Claims

1. Method for opening an emergency door (1) of an aircraft cabin (C1) in a fuselage (2) according to opening kinematics for a door arranged in a cutout (10) in the fuselage (2), from an initial door (1) state in the closed position, with a profile aligned with the fuselage (2), such that it consists in carrying out the following succession of steps, generated in succession by the action of an opening control (5): a step of activation of intermediary movement units (51, 52), in order to unlock and unblock a pivoting control transmission (6) via a combined rotation between these intermediary movement units (51, 52), comprising a first (51) and a second (52) intermediary movement unit, respectively for locking/unlocking and for blocking/unblocking, the first intermediary unit (51) having a locking function which can be released from the second intermediary unit (52), and the second unit (52) having a function of blocking the access to movement, which is released when the first intermediary unit (51) has been disarmed, and these intermediary movement units (51, 52) having longitudinal axes of rotation (5x, 5b) supported by the door (1), at a distance which is designed to allow this combined rotation, a step of inclined lifting thus generated in association with the fuselage (2), by means of inclined sliding of the upper edge (1s) of the door (1) towards the interior of the cabin (I), and simultaneously lifting and sliding of its lower edge (1i), followed, by means of doubling-back of movement, by a step of exteriorization of the lower edge (1i) of the door outside the cabin (C1), by inclined sliding of the upper and lower edges (1s, 1i) of the door (1) in the inverse direction, and according to an inclination which is substantially the same as that of the upper edge (1s) in the lifting step, repositioning the upper edge (1s) of the door (1) simultaneously at the fuselage (2), and a final step of pivoting of the door (1) by means of locking and blocking of the control transmission (6) on the door (1), which is then pivoted around a longitudinal axis of rotation of the fuselage (A1), with the slidings being created by upper (20s) and lower (20i) guides for connection between frameworks (11, 21) of the door (1) and of the fuselage (2) opposite, as well as by guides (12E, 23) for cooperation of the control transmission (6) with the door (1).

2. Opening method according to Claim 1, wherein the step of activation of the intermediary movement units (51, 52) on the control transmission (6) starts with a phase of unlocking caused by combined rotation of the intermediary movement units (51, 52) from a locking/blocking position, with this unlocking giving rise to unblocking of the guides (23, 12E) for cooperation of the control transmission (6) with the door (1) and of the guides (Gs, 20s; Gi, 20i) for connection between the frameworks (11, 21).

3. Opening method according to either one of the preceding claims, wherein the step of inclined lifting of the door (1) is generated by simultaneous trajectories towards the interior of the cabin (P1) of the upper connection guides (20s), and upwards (P3) of the lower connection guides (20i), starting from an intermediary position (T) on the upper guides (20s), and from a low abutment position (Bi) on the lower connection guides (20i), as far as a high abutment position (Bs, S1) on these connection guides (20s, 20i) defining the doubling-back, whereas sliding of the door (1) occurs simultaneously in the cooperation guide (23, 12E) of the control transmission (6) as far as a high abutment position (B1, B2).

4. Opening method according to any one of the preceding claims, wherein, in the step of exeriorization of the door (1), the upper (20s) and lower (20i) connection guides follow, in the inverse direction and as far as their disconnection (Es, Ei), inclination trajectories (P2, P4) which are smaller than, or equal to, the inclination of the trajectories (P1) of the upper connection guides (20s) in the lifting step, and, simultaneously, the door (1) slides downwards on the cooperation guide (23) from the high position (B1, B2), until it reaches a low abutment (B4, B5), then, at the end of sliding, the cooperation guide (23) of the door (1) on the control transmission (6) is locked/blocked by the intermediary movement units (51, 52) in the position of locking abutment (B3), corresponding to the initial position of pivoting of the door (1).

5. Opening method according to any one of the preceding claims, wherein the final step of pivoting of the door (1) starts by driving of the locked/blocked door (1) on the control transmission (6) by the opening control (5) around the axis of rotation (A1) of the control transmission (6), until a predetermined end position is reached.

6. Opening method according to any one of the preceding claims, wherein compensation for the mass (8) of the door (1) is provided in order to balance this mass during the final lifting step.

7. System for opening an emergency door (1) positioned in an aircraft fuselage (2) for implementing the method according to any one of the preceding claims, this system comprising respective door and fuselage frameworks (11, 21) which extend opposite, at least one bolt/latch pair (51, 52), a door attachment fitting (12), and upper and lower guide tracks fitted in the framework of the fuselage (21), this opening system being such that it comprises a control handle (5) for combined rotation of at least the (un)locking/(un)blocking bolt/latch pair (51, 52), and an opening mechanism (30), which is equipped in at least one upper corner area (Zs) of the door (1) with a pivoting lever (6) which is articulated in rotation (A1) on an upper edge of the fuselage (2s), and is provided with tracks (23; F1, F2; 23p, 24) for guiding with slides in cooperation with the bolt/latch pair (51, 52) and with the door attachment fitting (12), the bolt (51) having two end lugs (5E, 5F), i.e. a lug (5E) which can circulate in guide tracks (R1, R2) integrated in the latch (52), and a lug (5F) which can slide on a ramp portion (R3) with a configuration which ends in a locking abutment (B3), with the latch (52) having a face (52f) which can cooperate with a connected wall (23p) of a ramp (R3) of the pivoting lever (6), with upper (Gs) and lower (Gi) rollers fitted in the lateral framework of the door (11c) in order to form means for guiding in association with corresponding guide tracks (20s, 22s; 20i, 22i) fitted in the fuselage framework (21c) opposite, with the upper guide tracks (20s, 22s) being globally inclined in a rising manner towards the interior of the cabin (I), and the lower guide tracks (20, 22i) being curved, and such that each upper guide track (20s) has two substantially linear consecutive slide portions (P1, P2) in which the rollers (Gs) obtained from the corresponding lateral beam (11c) of the door framework (11) respectively circulate, and each lower guide track (22i) has a curved configuration (P3, P4) with a top (S1).

8. Opening system according to the preceding claim, wherein the upper guide tracks (20s, 22s) have a high end inner abutment (Bs) and portions (P1, P2) which are substantially linear and inclined as far as a low outer end opening (Es), and the lower guide tracks (20i, 22i) have a low inner end abutment (Bi) which is coupled with a substantially vertical portion (P3) provided with a top (S1) and extended by a substantially linear portion (P4) with an end (Ei) which is open towards the exterior (E) according to an inclination with a gradient smaller than that of the portions (P1, P2) of the upper guide tracks (20s, 22s).

9. Opening system according to either one of Claims 7 and 8, wherein the (each) pivoting lever (6) has a guide track (23) in cooperation with lugs (12E) obtained from the door attachment fitting (12), with this guide track (23) having rims which act as a ramp (R3, 23p) for the bolt (51) and the latch (52).

10. Opening system according to any one of Claims 7 to 9, wherein the door framework (11) has lateral sides (11c) which are integral with, or which incorporate, the door attachment fittings (12).

11. Opening system according to any one of Claims 7 to 10, wherein a spring (8) for compensation for the mass of the door (1) is fitted on the axis of rotation (A1) of the pivoting lever (6), in order to balance the mass of the door (1) during the pivoting.

12. Opening system according to any one of Claims 7 to 11, wherein auxiliary abutments (7) are secured at the corner of joining of the lateral beams (11c) and of the door framework longitudinal beam (11a), and at the fuselage framework longitudinal beam (21a) opposite.

13. Emergency door (1) of an aircraft cabin (C1) in a fuselage (2), **characterized in that** it comprises an opening system according to any one of Claims 7 to 12.
